# EUROPÄISCHE PATENTSCHRIFT

(11) **EP 0 842 130 B1**
(45) Veröffentlichungstag und Bekanntmachung des Hinweises auf die Patenterteilung: **04.10.2000**
(21) Anmeldenummer: 96925711.2
(22) Anmeldetag: 11.07.1996
(51) Int. Cl.: C04B 35/593, C04B 35/622, B22F 5/06, B22F 3/12

(54) **VERFAHREN ZUR HERSTELLUNG VON KERAMISCHEN ODER PULVERMETALLURGISCHEN BAUTEILEN MIT EINER SCHRAUBENFÖRMIGEN AUSSENKONTUR UND KERAMISCHES ODER PULVERMETALLURGISCHES BAUTEIL MIT SCHRAUBENFÖRMIGER AUSSENKONTUR**
PROCESS FOR PRODUCING CERAMIC OR POWDERED METAL COMPONENTS WITH A SCREW-LIKE OUTER SHAPE AND CERAMIC OR POWDERED METAL COMPONENT WITH SUCH A SHAPE
PROCEDE DE FABRICATION DE COMPOSANTS EN CERAMIQUE OU EN POUDRE METALLIQUE AU CONTOUR EXTERIEUR EN FORME DE VIS, ET COMPOSANTS EN CERAMIQUE OU POUDRE METALLIQUE AU CONTOUR EXTERIEUR EN FORME DE VIS

(30) Priorität: 28.07.1995 DE 19527695
(43) Veröffentlichungstag der Anmeldung: 20.05.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: LENK, Reinhard, 02779 Grossschöna (DE); GESEMANN, Hans-Jürgen, D-09648 Seifersbach (DE); SCHÖNECKER, Andreas, D-01705 Freital (DE); TAUT, Christine, 45359 Essen (DE); GÖTZ, Horst, D-01217 Dresden (DE)
(74) Vertreter: Rauschenbach, Marion, Dipl.-Ing.
(86) Internationale Anmeldenummer: EP9603027
(87) Internationale Veröffentlichungsnummer: WO9705082

(56) Entgegenhaltungen:
- WO-A-93/13923
- GB-A- 598 423
- GB-A- 2 250 467

## Beschreibung

### Technisches Gebiet

Die Erfindung bezieht sich auf die Gebiete der Konstruktionskeramik, des Maschinenbaus, des Fahrzeug- und Anlagenbaus und der Medizintechnik und betrifft die Herstellung von keramischen oder pulvermetallurgischen Bauteilen, die eine schraubenförmige Außenkontur aufweisen, wie z.B. Bohrer, Schrauben usw. und derartige Bauteile.

### Stand der Technik

Bauteile mit einer schraubenförmigen Außenkontur finden vielseitige Anwendung in einer Reihe von Bereichen der Industrie. Sie sind unter anderem unverzichtbar für die spanende Bearbeitung von Werkstoffen.

Die Wirkung derartiger Werkzeuge, wie z.B. von Bohrern beruht darauf, daß mittels kombinierter Vorschub- und Schnittbewegung Material vom zu bearbeitenden Werkstück abgespant und durch ein Führung von der Bearbeitungsfläche entfernt wird. Die Werkzeugachse, die Achse der zu erzeugenden Innenfläche und die Richtung der Vorschubbewegung sind dabei zueinander parallel.
Um diese Wirkung zu erreichen, müssen derartige Werkzeuge eine hintergriffige schraubenförmige Aussparung aufweisen, die als Führung für den Materialtransport dient.

Eine breite Anwendung finden Bohrer aus Metallen oder Metalllegierungen. Diese Bohrer werden mittels in der Metallurgie üblicher Formgebungsverfahren hergestellt. So werden z.B. beim Einsatz von Hartmetallen als Bohrermaterial zunächst auf pulvermetallurgischem Wege Rundstäbe geformt, diese anschließend gesintert und danach mittels Schleifen in die endgültige Geometrie überführt.

Die Bearbeitung von Werkstoffen hoher Härte wird durch den Einsatz von Sonderwerkstoffen, wie z.B. Hartmetallen, möglich oder dadurch, daß die Bohrerspitze selbst gehärtet oder mit Hartmetall- oder Diamantplättchen oder -kristallen verbunden wird.

Bohrer aus keramischen Materialien sind gegenwärtig noch nicht verbreitet. Es ist bekannt, das Bohrer aus Siliziumnitrid für die Schaltkreisherstellung (JP 03251304) aus Zirkonoxid (JP 01087558, JP 61242954) aus Aluminiumoxid und Zirkonoxid (JP 01033056) oder aus Aluminiumoxid (JP 01033057) hergestellt werden.
Bei diesen Verfahren werden mittels herkömmlicher keramischer Formgebung (kaltisostatisches Pressen) Rohlinge hergestellt, gesintert und anschließend durch mechanische Bearbeitung in die gewünschte Bohrergeometrie überführt. Derartig hergestellte Bohrer aus den genannten Zusammensetzungen zeichnen sich durch eine hohe Verschleißfestigkeit aus. Mit diesen Verfahren ist keine endformnahe Formgebung von Bohrern möglich.

Der Nachteil der bisherigen Entwicklungen besteht in ihrer Herstellungstechnologie, den damit verbundenen hohen Herstellungskosten und der relativ langen Herstellungszeit. Diese Mängel haben bisher eine breite Anwendung von Bohrern aus keramischen Materialien verhindert oder behindert.

Weiterhin bekannt ist es, daß durch kaltisostatisches Pressen Formkörper mit einer Vorsprünge aufweisenden Außenkontur hergestellt werden können (DE 21 35 959). Bei diesen Verfahren wird in eine flexible Form, die die Außenkontur des zu fertigenden Bauteiles aufweist, ein keramisches Pulver eingebracht und anschließend von allen Seiten gleichzeitig ein gleichgroßer Druck übertragen, der zur Verfestigung des Pulvers führt. Durch die Druckausübung wird die Form so verformt, daß der Innenraum verkleinert und das Pulver verdichtet wird. Es tritt also sowohl bei dem zu verdichtenden Pulver als auch bei der flexiblen Form während der Druckausübung eine Volumenschwindung auf, die bei der Form reversibel ist. Danach wird der Druck von der flexiblen Form genommen, und diese nimmt ihre ursprüngliche Form und Größe wieder an. Anschließend kann das Bauteil aus der flexiblen Form entformt werden.

Durch dieses Verfahren ist die Herstellung von Bauteilen mit endformnahen schraubenförmigen Außenkonturen aufgrund der ungleichmäßigen Verdichtung nur schwierig möglich, da exakte geometrische Strukturen erzeugt werden müssen, und insbesondere ist die Herstellung von hintergriffigen Strukturen, wie sie z.B. bei Bohrern erforderlich sind, aufgrund der Rückausdehnung der flexiblen Form nicht möglich.

In GB,A, 2250467 wird die Herstellung von Fassungen für elektrochemische Zellen durch isostatisches Pressen eines pulverförmigen Ausgangsmaterials auf einen Kern mit einer schraubenförmigen Außenkontur beschrieben. Nach der Formgebung wird der Kern herausgeschraubt. Eine hintergriffige schraubenförmige Kontur im Inneren des Formkörpers ist nicht gegeben.

Formgebungsmöglichkeiten für Metallpulver zu hohlen Formkörpern mit komplexen Geometrien werden in GB,A,598423 beschrieben. Nach dem Füllen der Form mit dem Metallpulver wird in das Forminnere ein Druckintegrator eingeführt, der das Metallpulver gegen die Negativkontur der Form verdichtet und so beispielsweise eine schraubenförmige Kontur ausformen kann. Die Gestaltung einer hintergriffigen Kontur ist damit nicht möglich.

Das Spritzgießen von Pulverwerkstoffen in Werkzeuge mit elastischen Formeinsätzen wird in WO,A,9313923 beschrieben. Die verwendeten elastischen Formen weisen im ruhenden Zustand nicht die Kontur des zu fertigenden Bauteils auf, sondern schmiegen sich an die Negativstruktur der Spritzgießform beim Füllen der Form unter Druck an. Nach der Formgebung ist das Bauteil mit dem ausgedehnten elastischen Formteil dicht umhüllt, und muß anschließend von diesem gelöst werden. Die Formfüllprozesse beim Spritzgießen von Pulverwerkstoffen werden dadurch besser beherrscht und die Herstellung von z.B. Kugeln wird möglich.

In speziellen Bereichen, wie z.B. in der Chirugie, werden bisher Bohrer aus konventionellen Materialien, im wesentlichen Edelstahl, verwendet. Diese Bohrer verschleißen sehr schnell. Die Folge davon sind häufig notwendiger Bohrerwechsel, unpräzises Bohren, Verkantungen, Abgleiten von Knochenfragmenten, erhöhter Kraftaufwand und eine erhöhte Temperaturbelastung an der Bohrstelle.
Weiterhin ist es auch nicht möglich, die Temperatur an der Bohrstelle, in-situ zu messen.

Bei Überschreiten einer Grenztemperatur treten irreversible thermische Schädigungen des Knochens auf, die formschlüssige Verbindungen zwischen Implantaten oder Schrauben und Knochen verhindern oder zum Versagen der Verbindung führen können. Die Grenztemperatur im Bereich der Medizintechnik liegt bei 50 °C.

### Darstellung der Erfindung

Die Aufgabe der Erfindung besteht darin, ein kostengünstiges Verfahren zur Herstellung von keramischen oder pulvermetallurgischen Bauteilen mit schraubenförmiger Außenkontur anzugeben, durch das Bauteile mit einer hohen Verschleißfestigkeit herstellbar sind, die wenig spröde, chemisch resistent und sterilisierbar sind.

Die Aufgabe wird durch die in den Ansprüchen angegebene Erfindung gelöst.

Bei dem erfindungsgemäßen Verfahren zur Herstellung von keramischen oder pulvermetallurgischen Bauteilen mit einer schraubenförmigen Außenkontur wird aus keramischen Materialien aus dem Bereich der Konstruktionskeramik oder aus pulvermetallurgischen Materialien und aus einem oder mehreren Bindemitteln eine Pulvermischung oder ein Schlicker hergestellt. Diese Pulvermischung oder dieser Schlicker wird in eine Form eingebracht, deren Innenkontur der schraubenförmigen Außenkontur des keramischen oder pulvermetallurgischen Bauteils entspricht. Anschließend wird die Pulvermischung oder der Schlicker in der Form verfestigt. Die Form besteht aus einem elastischen Material und ist durch eine oder mehrere Trennebenen ganz oder teilweise geteilt und mit oder ohne Querteilung(en) versehen. Der so erhaltene Grünkörper wird anschließend einer Wärmebehandlung unterzogen.

Vorteilhafterweise wird als keramisches Material Siliziumnitrid verwendet.

Weiterhin vorteilhafterweise wird dichtes Siliziumnitrid mit 1 - 20 Ma-% von mindestens einem der Additive MgO oder CaO oder Y₂O₃ oder Seltene Erden und 0 - 0,8 Ma-% Al₂O₃ und 0 - 30 Ma-% TiC und /oder TiN eingesetzt, wobei die entstehende Gefügekomposition eine Selbstschärfung zur Folge hat.

Ebenfalls vorteilhafterweise wird als pulvermetallurgisches Material Hartmetall verwendet.

Vorteilhafterweise wird als Bindemittel ein thermoplastisches Bindemittel eingesetzt.

Auch vorteilhafterweise wird ein Bauteil mit einer schraubenförmigen hintergriffigen Außenkontur hergestellt.

Es ist vorteilhaft, daß der Grünkörper aus keramischen oder pulvermetallurgischen Materialien nach der Formgebung mechanisch bearbeitet wird.

Es ist ebenfalls vorteilhaft, daß vor der Verfestigung des Grünkörpers zusätzlich in sein Inneres ein oder mehrere Kerne zur Herstellung von Aussparungen, Hohlräume, Durchführungen eingebracht werden.

Es ist weiterhin vorteilhaft, daß die zur Herstellung von Aussparungen, Hohlräumen, Durchführungen eingebrachten Kerne eine schraubenförmige, zylindrische, konische oder geometrisch unregelmäßige Außenkontur aufweisen.

Und ebenfalls vorteilhaft ist es, daß ein zylindrischer Hohlraum zur Aufnahme eines thermischen Sensors hergestellt wird.

Und auch vorteilhaft ist es, wenn die Form durch eine oder mehrere schraubenförmige Trennebenen ganz oder teilweise geteilt und mit oder ohne Querteilung(en) versehen ist.

Und weiterhin ist es vorteilhaft, daß die Trennung der Form in der oder den Trennebenen erst nach der Verfestigung des Grünkörpers erfolgt.

Die Aufgabe der Erfindung wird weiterhin gelöst durch ein nach einem der Ansprüche 8-10 erhältliches keramisches oder pulvermetallurgisches Bauteil mit einer schraubenförmigen Außenkontur bei dem im Inneren des Bauteils ein oder mehrere schraubenförmige, zylindrische, konische oder geometrisch unregelmäßig geformte Aussparungen, Hohlräume oder Durchführungen vorhanden sind, in denen sich ein oder mehrere Sensoren und Signalleitungen befinden.

Durch das erfindungsgemäße Verfahren wird es möglich auf einfache und kostengünstige Weise keramische oder pulvermetallurgische Bauteile mit schraubenförmiger Außenkontur herzustellen.

Derartige Bauteile weisen den besonderen Vorteil auf, daß ihre geometrische Außenkontur bereits nach der Formgebung vollständig gegeben ist.

Weiterhin bietet die vorliegende Erfindung den Vorteil, daß das Innere eines derartigen Bauteils frei gestaltet werden kann. Dadurch wird es möglich, z.B. Temperaturmessungen in unmittelbarer Nähe einer Bohrerspitze während des Bohrvorganges vorzunehmen. Als Sensorwerkstoff für den thermischen Sensor kann vorteilhafterweise eine Funktionskeramik eingesetzt werden, die durch die Änderung ihres ohmschen Widerstandes, ihrer Kapazität oder anderen temperaturempfindlicher Eigenschaften ein Signal erzeugt, daß angezeigt werden kann.

Es ist auch vorteilhaft, daß beim Einsatz einer dichten Siliziumnitridkeramik mit speziellen Zusätzen nach dem Sintern eine Gefügekomposition erreicht wird, die die Selbstschärfung z.B. eines Bohrers ermöglicht.

### Beste Wege zur Ausführung der Erfindung

Im weiteren wird die Erfindung anhand von Ausführungsbeispielen näher erläutert, wobei der Weg gemäß Beispiel 1, basierend auf den Merkmalen der Patentansprüche 1 und 13 als besonders vorteilhaft anzusehen ist.

### Beispiel 1

In eine Form aus Kautschuk, die im Inneren die schraubenförmige Außenkontur des herzustellenden Bauteils aufweist, wird ein keramischer Schlicker aus 76,9 Ma-% Siliziumnitrid, 19,2 Ma-% Paraffin und 3,5 Ma% Stearinsäure bei einer Temperatur von 90 °C und unter einem Druck von 0,25 MPa eingebracht. Die Kautschukform wird einer Temperatur von 30 °C ausgesetzt und damit der Schlicker verfestigt. Damit ist ein Grünkörper mit ausreichender Stabilität für die anschließende Sinterung hergestellt worden.
Zur Ausformung des Grünkörpers wird die Kautschukform an ihrer schraubenförmigen Trennebene geöffnet und der Grünkörper kann entformt werden. Die Kautschukform kann zur Herstellung weiterer Grünkörper weiterverwendet werden.
Nach einer Sinterung bei 1900 °C und 90 min, 5 MPa N₂ ist ein keramischer Bohrer entstanden. Anschließend werden die Schneiden des Bohrers angeschliffen.
Der so hergestellte Bohrer ist chemisch resistent, relativ unempfindlich gegen mechanische Beanspruchungen, biologisch inert und sterilisierbar. Die Festigkeit dieses Bohrers ist entsprechend den Festigkeiten der Bohrer nach dem bekannten Stand der Technik.

### Beispiel 2

In die Form aus Kautschuk mit der schraubenförmigen Innenkontur wird ein Kern aus Metall mit konischer Außenkontur eingebracht. Anschließend wird ein keramischer Schlicker entsprechend Beispiel 1 in die Form eingebracht und entsprechend Beispiel 1 weiterbehandelt.

Nach der Verfestigung wird der Grünkörper entsprechend Beispiel 1 entformt und der konische Kern aus dem Grünkörper entnommen.
Der so hergestellte Grünkörper wird entsprechend Beispiel 1 gesintert.
In den konischen Innenraum des gesinterten Bauteils wird ein thermischer Sensor eingefügt, der die Temperatur in der Nähe der Bohrerspitze anzeigt.

## Patentansprüche

1. Verfahren zur Herstellung von keramischen oder pulvermetallurgischen Bauteilen mit einer schraubenförmigen Außenkontur, bei dem aus keramischen Materialien aus dem Bereich der Konstruktionskeramik oder aus pulvermetallurgischen Materialien und aus einem oder mehreren Bindemitteln eine Pulvermischung oder ein Schlicker hergestellt wird und diese Pulvermischung oder dieser Schlicker in eine Form eingebracht wird, deren Innenkontur der schraubenförmigen Außenkontur des keramischen oder pulvermetallurgischen Bauteils entspricht und die Pulvermischung oder der Schlicker in der Form verfestigt wird, wobei die Form aus einem elastischen Material besteht und durch eine oder mehrere Trennebenen ganz oder teilweise geteilt und mit oder ohne Querteilung(en) versehen ist, und der erhaltene Grünkörper anschließend einer Wärmebehandlung unterzogen wird.

2. Verfahren nach Anspruch 1, bei dem als keramisches Material Siliziumnitrid verwendet wird.

3. Verfahren nach Anspruch 2, bei dem dichtes Siliziumnitrid mit 1 - 20 Ma-% von mindestens einem der Additive MgO oder CaO oder Y₂O₃ oder Seltene Erden und 0 - 0,8 Ma-% Al₂O₃ und 0 - 30 Ma-% TiC und /oder TiN eingesetzt wird, wobei die entstehende Gefügekomposition eine Selbstschärfung zur Folge hat.

4. Verfahren nach Anspruch 1, bei dem als pulvermetallurgisches Material Hartmetall verwendet wird.

5. Verfahren nach Anspruch 1, bei dem als Bindemittel ein thermoplastisches Bindemittel eingesetzt wird.

6. Verfahren nach Anspruch 1, bei dem ein Bauteil mit einer schraubenförmigen hintergriffigen Außenkontur hergestellt wird.

7. Verfahren nach Anspruch 1, bei dem der Grünkörper aus keramischen oder pulvermetallurgischen Materialien nach der Formgebung mechanisch bearbeitet wird.

8. Verfahren nach Anspruch 1, bei dem vor der Verfestigung des Grünkörpers zusätzlich in sein Inneres ein oder mehrere Kerne zur Herstellung von Aussparungen, Hohlräume, Durchführungen eingebracht werden.

9. Verfahren nach Anspruch 8, bei dem die zur Herstellung von Aussparungen, Hohlräumen, Durchführungen eingebrachten Kerne eine schraubenförmige, zylindrische, konische oder geometrisch unregelmäßige Außenkontur aufweisen.

10. Verfahren nach Anspruch 8, bei dem ein zylindrischer Hohlraum zur Aufnahme eines thermischen Sensors hergestellt wird.

11. Verfahren nach Anspruch 1, bei dem die Form durch eine oder mehrere schraubenförmige Trennebenen ganz oder teilweise geteilt und mit oder ohne Querteilung(en) versehen ist.

12. Verfahren nach Anspruch 1, bei dem die Trennung der Form in der oder den Trennebenen erst nach der Verfestigung des Grünkörpers erfolgt.

13. Keramisches oder pulvermetallurgisches Bauteil erhätlich nach einem der Ansprüche 8-10, bei dem ein oder mehrere Sensoren und Signalleitungen in den Aussparungen, Hohlräumen oder Durchführungen vorhanden sind.

## Claims

1. Process for the production of ceramic or powdered metal components with a helical external contour, in which a powder mixture or a slip is made from ceramic materials from the structural ceramics sector or from powdered metal materials and from one or more binders, and this powder mixture or this slip is introduced into a mould, the internal contour of which corresponds to the helical external contour of the ceramic or powdered metal component, and the powder mixture or the slip is compacted in the mould, the mould consisting of an elastic material and being divided wholly or partly by one or more parting surfaces and provided with or without transverse division(s), and the green article obtained is then subjected to a heat treatment.

2. Process according to claim 1, in which silicon nitride is used as the ceramic material.

3. Process according to claim 2, in which fine-grained silicon nitride is used with 1 - 20 mass % of at least one of the additives MgO or CaO or Y₂O₃ or rare earths and 0 - 0.8 mass % Al₂O₃ and 0 - 30 mass % TiC and/or TiN, the structural composition resulting in self-sharpening.

4. Process according to claim 1, in which hard metal is used as the powdered metal material.

5. Process according to claim 1, in which a thermoplastic binder is used as the binder.

6. Process according to claim 1, in which a component with a helical, rear-engaging external contour is produced.

7. Process according to claim 1, in which the green article of ceramic or powdered metal materials is machined after shaping.

8. Process according to claim 1, in which, before compacting the green article, one or more cores for the production of recesses, voids or ducts are additionally introduced into the interior thereof.

9. Process according to claim 8, in which the cores introduced for the production of recesses, voids or ducts have a helical, cylindrical, conical or geometrically irregular external contour.

10. Process according to claim 8, in which a cylindrical void is produced to hold a thermal sensor.

11. Process according to claim 1, in which the mould is divided wholly or partly by one or more helical parting surfaces and provided with or without transverse division(s).

12. Process according to claim 1, in which the separation of the mould at the parting surface or surfaces takes place only after the green article has been compacted.

13. Ceramic or powdered metal component obtainable according to one of claims 8-10, in which one or more sensors and signal lines are present in the recesses, voids or ducts.

## Revendications

1. Procédé de fabrication de pièces de construction en céramique ou pour la métallurgie des poudres ayant un profil externe hélicoïdal,
dans lequel
on produit un mélange pulvérulent ou une barbotine à partir d'un matériau céramique appartenant au domaine de la céramique pour le bâtiment ou des matériaux de la métallurgie des poudres, et d'un ou plusieurs liants, et l'on introduit ce mélange pulvérulent ou cette barbotine dans un moule dont le profil interne correspond au profil externe hélicoïdal de la pièce de céramique ou de métallurgie des poudres et le mélange pulvérulent ou la barbotine est solidifié(e) dans le moule, ce moule étant constitué d'un matériau élastique et entièrement ou partiellement divisé par un ou plusieurs plans de séparation et muni ou non d'une ou plusieurs séparations transversales, et où l'ébauche obtenue est ensuite soumise à un traitement thermique.

2. Procédé selon la revendication 1,
dans lequel
on utilise comme matériau céramique le nitrure de silicium.

3. Procédé selon la revendication 2,
dans lequel
on utilise du nitrure de silicium dense avec 1 à 20 % en masse d'au moins un des additifs MgO ou CaO ou Y₂O₃ ou de terres rares, 0 à 0,8 % en masse d'Al₂O₃, et 0 à 30 % en masse de TiC et/ou de TiN, la composition structurale ayant pour conséquence un auto-affutage.

4. Procédé selon la revendication 1,
dans lequel
on utilise un métal dur comme matériau de métallurgie des poudres.

5. Procédé selon la revendication 1,
dans lequel
on utilise comme liant un liant thermoplastique.

6. Procédé selon la revendication 1,
dans lequel
on utilise une pièce ayant un profil externe antidérapant hélicoïdal.

7. Procédé selon la revendication 1,
dans lequel
le corps de base en matériaux céramiques ou de métallurgie des poudres subit un traitement mécanique après le formage.

8. Procédé selon la revendication 1,
dans lequel
avant la solidification de l'ébauche, on introduit en outre à l'intérieur de celle-ci un ou plusieurs noyaux pour produire des évidements, des creux et des passages.

9. Procédé selon la revendication 8,
dans lequel
les noyaux introduits pour produire des évidements, des creux et des passages présentent un profil externe hélicoïdal, cylindrique, conique ou géométriquement irrégulier.

10. Procédé selon la revendication 8,
dans lequel
on produit un creux cylindrique pour recevoir un capteur thermique.

11. Procédé selon la revendication 1,
dans lequel
le moule est entièrement ou partiellement divisé par un ou plusieurs plans de séparation hélicoïdaux et présente ou non une ou plusieurs séparations transversales.

12. Procédé selon la revendication 1,
dans lequel
la séparation du moule selon le ou les plans de séparation ne s'effectue qu'après solidification de l'ébauche.

13. Pièce céramique ou de métallurgie des poudres que l'on peut obtenir selon l'une des revendications 8 à 10,
dans laquelle
un ou plusieurs capteurs et un ou plusieurs circuits de signalisation se trouvent dans les évidements, creux et passages.
